# EUROPEAN PATENT SPECIFICATION

(11) **EP 1 657 641 B1**
(45) Date of publication and mention of the grant of the patent: **21.04.2010**
(21) Application number: 04292703.8
(22) Date of filing: 16.11.2004
(51) Int. Cl.: G06F 11/00, G06F 11/34

(54) **Method and computer product for automatically overcoming a failure in an EML (element management layer) Server**
Verfahren und Computerprodukt zur Überwindung eines Fehlers in einem EML (element management layer) Server
Procédé et produit d'ordinateur pour corriger automatiquement une défaillance dans un serveur EML (element management layer)

(43) Date of publication of application: 17.05.2006
(73) Proprietor: Alcatel Lucent, 75008 Paris (FR)
(72) Inventor: Paparella, Andrea, 21052 Busto Arsizio (Varese) (IT); Riglietti, Roberto, 20059 Vimercate (Milano) (IT); Romualdi, Roberto, 20161 Milano (IT)
(74) Representative: Schmidt, Werner Karl

(56) References cited:
- WO-A-00/45266
- US-A- 4 503 535

## Description

The present invention relates to the field of element management layer servers in telecommunication networks and in particular a method for automatically overcoming possible failures in such servers. Furthermore, the present invention relates to a computer product adapted to perform the method steps.

As it is known in the art of telecommunications, network elements are at least partially managed by servers through proper software tools. These management software tools are organized in a Telecommunication Management Network (TMN) hierarchy, which consists in a set of standardized protocols that create a layered architecture used for monitoring and managing telecommunications equipment, thus enabling highly complex networks to be managed as a single cohesive unit. The lower management layer of the TMN hierarchy consists in the Element Management Layer, briefly termed "EML". EML deals, for instance, with managing alarms, configuring the network apparatus, performing back-up and restore mechanisms (both for data and the software) and collecting performance monitoring information (detection of power consumption, temperature, available resources and others).

An EML server could incur problems because of different reasons. For instances, when configuration data and/or configuration sequence-order of the network element are not consistent to those designed, the EML server could fail. An EML server could fail also because of a software bug.

Presently, when a problem arises, the server becomes completely failed. Generally, the telecom service provider is not able to overcome the problem and contacts the infrastructure designer/provider. Whilst sometimes the problem could be overcome rather easily by the infrastructure provider, the time from problem notification to problem solution is of the order of some hours or even days. This is just because the service provider has to detect the problem and notify it to the telecom infrastructure provider; in turn, the infrastructure provider has to find the proper solution, possibly by testing an in-house server; and finally, it has to instruct the service provider accordingly. Finally, the service provider has to take the suggested action.

The Applicant has observed that the time elapsed from problem detection to problem solution is deemed to be too high and could be profitably reduced, thus reducing the operating and maintenance cost of the whole telecommunication network (operating expenditure or "OPEX"). Thus, the Applicant has faced the general problem to reduce the OPEX of a telecommunication network. More in detail, the problem is how to reduce the maintenance time and the downtime of an EML server in a telecommunication network. From service provider point of view, having a quick feedback about an unexpected error is strategic for his business.

These and further problems are solved by the method according to claim 1 and by the computer product according to claim 14. Further advantageous features of the present invention are set forth in the respective dependent claims. All the claims are deemed to be an integral part of the present description.

WO 0045266 discloses a method and system for automated tuning of devices. It uses tuning agents that are augmented by communicating with a remote solution server. The solution server interfaces with a set of stored solutions, which the solution server is able to search to find a solution appropriate to a problem reported by an agent. Once the solution server identifies an appropriate solution, the solution downloads the solution to an agent and the agent implements the solution.

According to a first aspect of the present invention a new method for automatically overcoming a failure and/or an error in an EML server is provided. Finally, according to a second aspect of the present invention, a new computer product is provided.

According to the new method, the EML server is composed by several active Units having substantially the same basic structure. Furthermore, a common error management for all the Units is provided through an error collector and an error supervisor. The Units periodically send error and status information to the error collector. The error collector, by processing this information coming from the Units, is able to determine whether a Unit is affected by an error. The processed error and status information are then sent to the error supervisor, which further processes this information and decides, through a suitable failure model, the workaround actions to be performed on the Unit affected by error. The workaround actions are finally executed, without any manual intervention of an external operator.

With the method according to the present invention, managing the error detection and the workaround procedure in an EML server is simplified. More particularly, such kind of method allows the self-detection of errors and the automatic activation of workarounds. If the automatic workaround is successful, no time has been spent nor by the service provider, neither by the network provider, to fix the problem. Besides, in case the automatic workaround does not fix the error, the network provider will be able to find more quickly a solution for such an error, as a number of hypothesis about the error cause can be discarded *a priori*. Hence, in both cases the EML server according to the present invention allows a reduction of the OPEX of the telecommunication network.

According to a first aspect of the present invention, a method for automatically overcoming a failure or an error in an EML server is provided. The method comprises the steps of: identifying one or more Units in said EML server; providing an error collector; providing an error supervisor; defining a failure model; notifying the error collector of the status of Units; processing Unit status information through said failure model, in said error supervisor; and instructing, through said error supervisor, the Units about workaround-actions to be taken.

The error collector and the error supervisor cooperate one with the other so that the error collector is adapted to detect whether the error supervisor is in operation or is failed and in that, if the error supervisor operation through a restore action.

The step of notifying the error collector of the status of Units is preferably carried out by said Units which send to said error collector status and/or error indication messages.

Preferably, the method further comprises a step of identifying in said EML server one or more Core-Units, said Core-Units being able to send to said error collector different core metrics.

Preferably, the step of processing Unit status information through said failure model comprises selecting workaround-actions from a set of predefined workaround-actions.

The Failure Model can be either static, dynamic or probabilistic.

The error supervisor can profitably store the taken workaround-actions in a proper log or memory.

Profitably, each sub-component individually communicates with said error collector and performs the workaround-actions according to the instructions from said error supervisor.

The method further comprises the steps of identifying, for each of said Units, a type of Unit; and defining, for each type of Unit, a set of predefined workaround-actions. The set of predefined workaround-actions may comprise workaround-actions which are aimed to move the Units affected by a failure or an error to a stable condition.

According to a possible implementation of the present invention, said workaround-actions to be taken comprise one or more of the following actions: restart, reset and restore.

Profitably, the error collector stores error reports coming from components which are external to the EML server. Preferably, the error collector stores the most meaningful indications in a log or memory.

The step of identifying, for each of said Units, a type of Unit may comprise the step of classifying said Units as permanent stated component, dynamic stated component and stateless component.

According to a different aspect, the present invention provides a computer product comprising computer program code means adapted to perform all the steps of the above method when said program is run on a computer. The computer product comprises a computer program or a computer readable storage medium.

According to a further aspect, the present invention provides a network element comprising a computer product as set forth above.

The present invention will become clear in view of the following detailed description, given by way of example and not of limitation, to be read in connection with the attached figures, wherein:
- Figure 1 is a schematic representation of a portion of a TMN layered structure, including an Element Management Layer according to the present invention;
- Figure 2 shows the structure of the EML server from the failure management point of view, according to the present invention;
- Figures 3a and 3b schematically show the structure of examples of Units as dynamic stated component and permanent stated component, respectively; and
- Figures 4a and 4b show examples of external error reporting, from an agent and from a user, respectively.

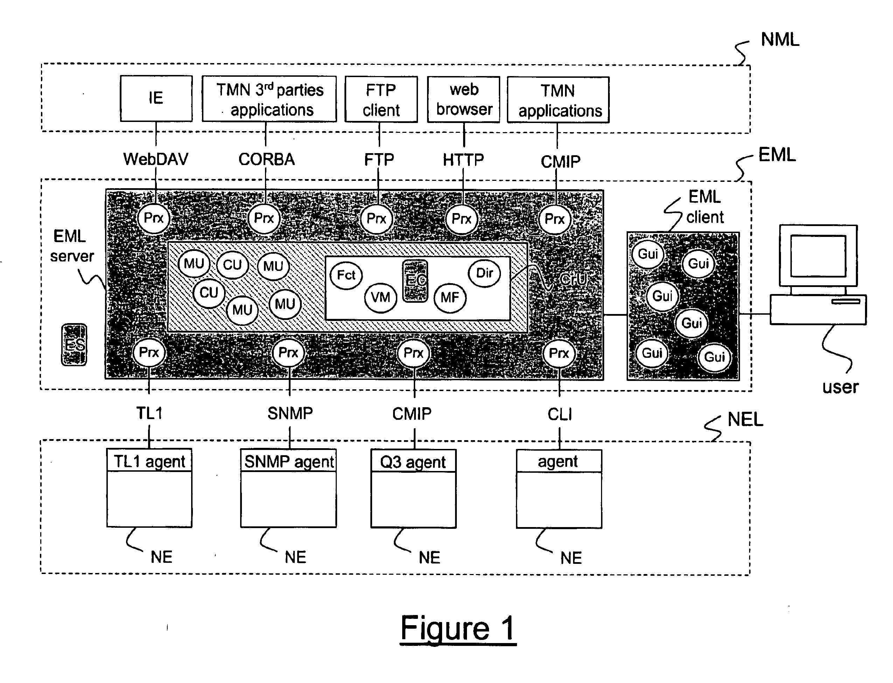

Figure 1 shows a schematic representation of a portion of a TMN layered structure including an Element Management Layer according to the present invention . As mentioned above, the Element Management Layer (EML) is a part of the TMN hierarchy. The EML is thus connected to its server layer of the TMN hierarchy, i.e. the Network Element Layer (NEL). As shown in Figure 1, for example, the EML server of the present invention may be connected, through suitable agents, to different network element communication protocols, such as:
- Transaction Language 1 (TL1),
- Simple Network Management Protocol (SNMP),
- Common Management Information Protocol (CMIP) and
- Command Line Interface (CLI).

The EML is also connected to its client layer in the TMN hierarchy, i.e. to the Network Management Layer (NML), which includes client supporting protocols, such as:
- Hyper Text Transfer Protocol (HTTP),
- Common Management Information Protocol (CMIP)
- File Transfer Protocol (FTP),
- Common Object Request Broker Architecture (CORBA), or
- Web Distribution Authoring and Versioning (WebDAV).

From the functional point of view, the EML comprises two separated entities, as shown in Figure 1: an EML server, interfacing with server and client layers of the TMN structure, and an EML client, interfacing directly with users through suitable interfaces. In the following, for simplicity, the whole software structure of the EML, including both the EML server and the EML client, will be referred to as "EML server".

As mentioned before, according to the present invention the EML server is divided in components called "Units". For instance, according to a preferred embodiment of the present invention, such Units can comprise the following types of Units:
- Management Unit (MU),
- Calculus Unit (CU),
- Proxy Unit (Prx), and
- Graphic User Interface Unit (GUI).

Typically, an EML client comprise all the GUls, in order to interface directly with the users (e.g. operators and software developers).

The main advantage of such a subdivision in Units is that the complexity of each Unit is less than the one of the entire EML server architecture. Therefore, in order to validate a new software version of a Unit it is simply possible to perform a combinatorial sequence of tests, which is often an exhaustive sequence. A simple automatic test system could support the Unit testing/validating at development phase.

On the other hand, such a subdivision in Units results in difficulties to verify the interaction of the Units (both spatial and temporal interactions) over the entire system. A Unit could register itself on neighbour Units (spatial interactions) and receive from them messages at every time (temporal interactions). The "combinatorial test-case generation technique" could provide an ineffective set of tests, as it could not cover all possible interactions at integration phase, thus resulting in difficulties to provide an exhaustive description of the EML server from the error point of view, as it will be explained in detail hereinafter.

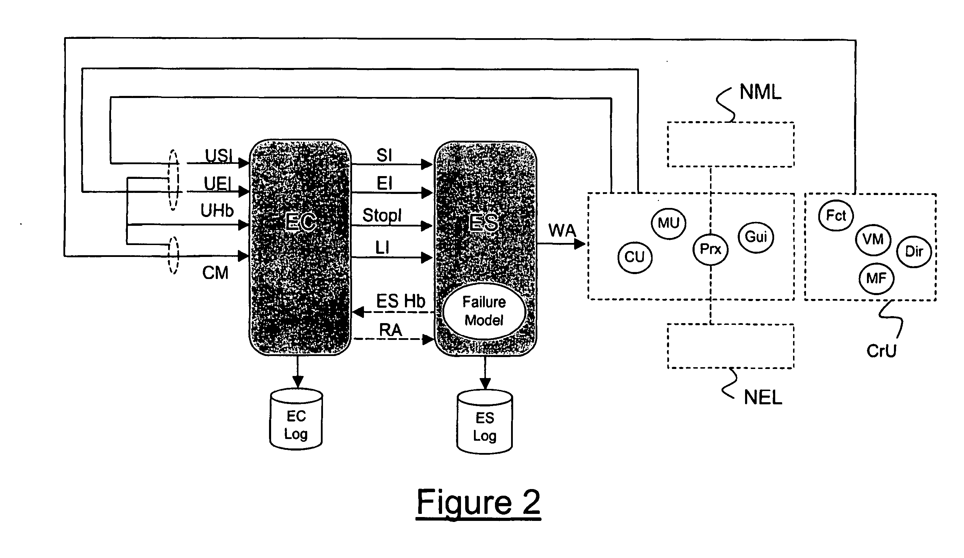

According to the present invention, each Unit is responsible for informing an error collector EC (shown in Figure 1) about its status and the occurred errors/failures, if any. Referring now to Figure 2, it can be noticed that each Unit sends to the error collector EC a number of messages or indications, including a Unit Status Indication (USI) and a Unit Error Indication (UEI). The messages are periodically sent to the error collector EC in order to implicitly support a so-called "heartbeat mechanism". In other words, when messages from a Unit are no more received by the error collector EC, it realizes that such a Unit has become fully failed and it automatically starts a workaround procedure.

With further reference to Figure 1 and Figure 2, it will be realized that the EML server architecture according to the invention comprises a number of Core-Units CrU. The Core-Units CrU are structural components of the EML server, i.e. they implement base functions which allow the other Units to perform their operations. The Core-Units can comprise, for instance:
- Directory Core-Units (Dir), which allow all the Units to register themselves;
- Message Forwarding Core-Units (MF), which manage the message exchanging mechanisms between Units;
- Factory Core-Units (Fct), which manage the creation of new Units; and
- Virtual Machine (VM), typically required by Java and Dotnet applications.

Similarly, the Core-Units send to the error collector EC different core metrics CM. Such core metrics could include, for example:
- virtual interconnections of the Units, for example in term of allocated memory, or CPU usage percentage (from the Directory Core-Unit "Dir"),
- message statistics of the Units, such as for example filling of input/output queues (from the Message Forwarding Core-Unit "MF"),
- number of Units created for each category (from the Factory Core-Unit "Fct"), and
- Virtual Machine utilization, in term of memory, threads/processes, CPU consuming, etc (from the Virtual Machine "VM").

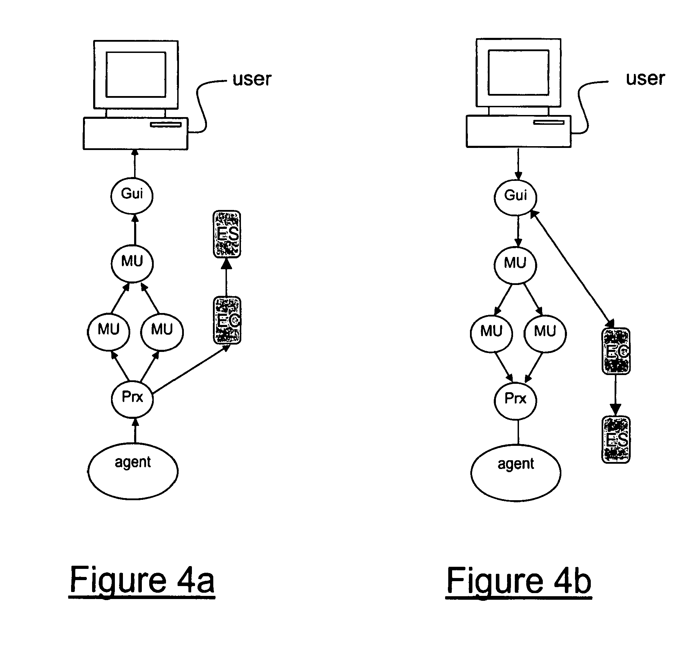

The error collector EC collects the Unit Status Indications (USI) and the Unit Error Indications (UEI) coming from the different Units, as well as the core metrics CM coming from the Core-Units. In addition, the error collector EC stores the error reports coming from components which are external to the EML server, i.e. agents and users, as it will be described herein after with reference to Figures 4a and 4b. Finally, the error collector detects, by unit heartbeat signals (Uhb), the complete failure (possibly a fatal error) of one or more Units, including the Core Units. The unit heartbeat signal (Uhb) is implicitly derived through the Unit Status Indication (USI), the Unit Error Indication (UEI) and the core metrics (CM). Finally, the error collector stores the received indications in a log or memory (EC log). The logged indications can be analyzed afterwards by the network provider/developer.

The EML server architecture according to the invention interacts with an error supervisor ES. Referring to Figure 1, it is realized that the error supervisor ES is an independent component (i.e. it is external to the EML server). The error supervisor ES receives various indications from the error collector. For instance, it receives Status Indications SI and Error Indications EI. In addition, the error supervisor ES receives stop indications (Stopl) that are calculated by the error collector (EC) using the Unit heartbeat signal (UHb). In turn, the error supervisor ES sends to the error collector its own heartbeat signal (ES Hb), so that the error collector can detect whether the error supervisor is in operation or is failed. When the error collector, through the error supervisor heartbeat signal (ES Hb), realizes that the error supervisor ES is failed, the error collector EC can restore the error supervisor operation through a restore action (RA), as shown in Figure 2.

The main task of the error supervisor ES is to correlate the error and status indications from the error collector EC with other information (e.g. the core metrics (load indication or "LI") provided by the Core-Units) and consequently decide, through a proper failure model, the workaround-actions (WA in Figure 2) to perform on the Unit which is affected by an error. The error supervisor ES can also store the decided actions in a proper log or memory (ES log), which can be afterwards analysed by the network provider/developer.

In order to simplify the processing performed by the error supervisor ES, all the Units implement the same mechanisms for detecting errors, as well as the same mechanisms for transmitting Unit Error Indications UEI to the error collector EC. Possibly, the Units can transmit Unit Error Indications UEI to registered Units.

Furthermore, in order to simplify the management of the workaround, a common set of workaround-actions is defined. The definition of the possible actions is based on the type of Unit. Three types of Units can be found:
1. dynamic stated component: when a dynamic stated component is restarted after a failure, it is not possible to recover the status it had before such failure, (i.e. a dynamic stated component includes only volatile memory devices);
2. permanent stated component: when a permanent stated component is restarted after a failure, it is possible to recover the status it had before such failure (i.e. a permanent stated component includes non-volatile memory devices); and
3. stateless component: this type of Unit has no status to recover after a failure (i.e., it is a pure calculus Unit).

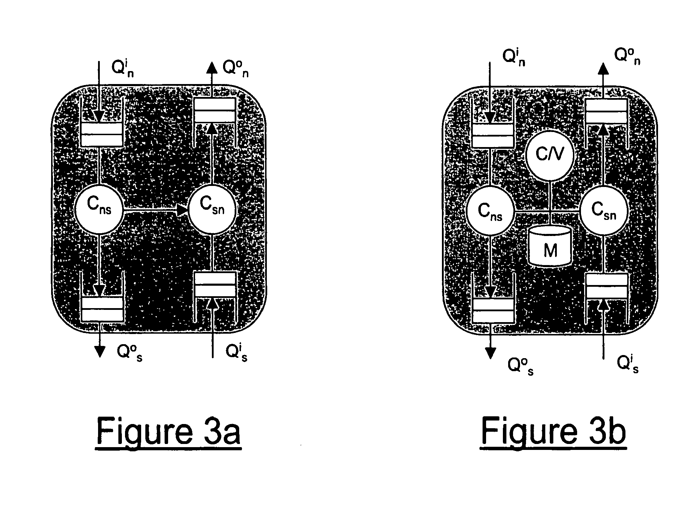

Figures 3a and 3b schematically show the structure of examples of Units as dynamic stated component and permanent stated component, respectively.

Referring to Figure 3a and 3b, each Unit comprises different sub-components, such as, for instance, queues, control sub-components, non-volatile memory sub-components, calculus sub-components or view sub-components.

For example, Figure 3a shows the architecture of a Unit as a dynamic stated component comprising two input queues Qⁱₙ, Qⁱₛ, two output queues Q^{o}ₙ, Q^{o}ₛ, and two control sub-components Cₙₛ, Cₛₙ ("n" stands for north and "s" stands for south). When the Unit represented in Figure 3a eventually undergoes a restart procedure, the status of the Unit before the restart is lost, as no permanent memory device is available within the Unit. Therefore, the Unit must be initialised to a default status.

Figure 3b shows an example of a Unit as a permanent stated component comprising a non-volatile memory sub-component M, two input queues Qⁱₙ, Qⁱₛ, two output queues Q^{o}ₙ, Q^{o}ₛ, two control sub-components Cₙₛ, Cₛₙ and a Calculus/View sub-component CN. When the Unit represented in Figure 3b eventually undergoes a restart procedure, its status before the restart can be restored, as all the parameters can be recovered into the non-volatile memory sub-component M.

According to the invention, each above-mentioned type of Unit is characterized by a set of supported workaround-actions. According to a preferred embodiment of the present invention, these actions are aimed to move the Unit affected by error to a stable condition, i.e. a condition in which the effects of the error are minimized. As the most stable condition is deemed to be the initial Unit inter-working, the actions decided by the error supervisor ES are aimed to move the Unit towards its initial condition (i.e. startup or default state). Hence, for stateless Units, the supported actions are:
- Restart() // supported by the Core-Units.

For dynamic stated Units, the supported actions are:
- Restart() // supported by the Core-Units;
- Reset() // force the status of the Unit to default.

For permanent stated Units, the supported actions are:
- Restart() // supported by the Core-Units;
- Reset() // force the status of the Unit to default;
- Restore() // load the stored parameters to recover the prior status.

It is remarked that the above actions are only a set of possibilities among a larger number of possible actions.

The error supervisor ES decides the action to perform on the Units affected by errors basing on a "failure model" (Figure 2). The failure model allows the error supervisor ES to determine the error status of the failed Units and the workaround actions to be performed on these failed Units, according to the information provided by the error collector.

The failure model comprises a description of the EML server from the error point of view. In particular, the failure model comprises a description of the interaction between Units and of the functional dependence between Units from the error point of view. In other words, the failure model associates an error status to a given set of Error Indications (coming from the Units), Status Indications (coming from the Units) and Load Indications (coming from the Core Units).

According to the type of description of the EML server, the failure model can be:
- static: the description of the EML server from the error point of view is exhaustive. Thus, each set of Error Indications, Status Indications and Load Indications correspond univocally to a single error status.
   The workaround actions to be taken on the failed Units are then determined univocally and deterministically. In this case, new error status (for instance, due to the insertion of a new software component into the EML sever) must be manually inserted into the static failure model; otherwise, they are unknown and they can not be fixed;
- dynamic: the description of the EML server from the error point of view is dynamically updated, i.e., when a new error status occurs, it is automatically inserted into the dynamic failure model through a learning mechanism, which can be based, for instance, on neural networks. In other words, when a new set of Error Indications, Status Indications and Load Indications occurs, the error supervisor requires the intervention of a neural network, which tries to deduce the error status from the sets of Error Indications, Status Indications and Load Indications already present into the failure model. Once deduced the error status, the error supervisor determines the suitable workaround actions. The error supervisor may also be provided with a memory device, which allows to classify such new error status, so that software developers are able to investigate them for developing next releases and updates of the software. Such a dynamic failure model is advantageously adaptive, i.e. it is able to take decisions even in uncertain situations, wherein new error status occur. Moreover, it can be advantageously applied to complex systems, where an exhaustive description of the system (as required by a static failure model) is rather impractical. However, such a dynamic failure model typically requires a very complex implementation, and it is characterized by a deterministic behaviour;
- probabilistic: this mechanisms is more suitable in case of a simple EML server, i.e. of an EML server characterised by a reduced number of Units or by Units with a reduced number of possible status. In a probabilistic failure model (or Bayesian failure model), a probabilistic description of the EML server is provided. In other words, all the possible status of the EML server are identified, and, for each pair of possible status, a parameter is estimated, which is related to the probability of the transition between the two status of each pair. Hence, according to these parameters, when the error supervisor receives from the error collector a set of Error Indications, Status Indications and Load Indications, the most probable error status is determined through a probabilistic algorithm. Finally, the workaround actions corresponding to the most probable error status are applied. In this probabilistic model, both an automatic update of the model (similarly to dynamic failures models) and a manual update of the model (similarly to static failure models) can be provided.

As mentioned above, the EML server according to the present invention also supports external error reporting. Figures 4a and 4b show two examples of external error reporting from an agent and from a user, respectively. In particular, referring to Figure 4a, an agent may send to the EML server an error report. This report is sent to a Proxy Unit Prx, propagated to the registered Units and finally collected by the error collector EC, which informs the error supervisor ES about the occurrence of the error. If the actions decided by the error supervisor ES and performed by the Units do not fix the error, the error report is sent to a Graphic Interface Unit GUI, which notifies to the user the presence of the unresolved error.

Besides, an error indication can also be generated by a user who finds an error, as shown in Figure 4b. The user can fill in an error notification form (not shown) and send it through a Graphic User Interface GUI to the involved Units and to the error collector EC, which notifies the error to the error supervisor ES. The error supervisor ES activates the workaround procedure on the involved Units. Finally, a report on the workaround procedure outcome is sent to the user.

It has to be noticed that, in transmission networks requiring dynamic failure model, the results of both the error reporting from agents, and the error reporting from users can be employed to dynamically update the failure model.

The EML server according to the present invention exhibits many advantages. First of all, the overall time for fixing an error is reduced with respect to the know solutions, as the workaround procedure is automatically activated and managed by the EML server, and no manual intervention of the network provider is required. Hence, all feedbacks between service provider and network provider, required for a known workaround procedure according to the prior art, which in general requires days or even weeks, are avoided. In many cases, if automatic workaround is successful, the network continues working without loosing time for waiting to fix the error ("downtime"). Anyway, even if automatic workaround is not successful, the network provider is able to search the solution without affecting the downtime of the network, with an overall reduction of the OPEX of the network.

## Claims

1. A method for automatically overcoming a failure or an error in an element management layer (EML) server in a telecommunication network, the method comprising the steps of:
- identifying one or more Units in said element management layer server;
- providing an error collector (EC);
- providing an error supervisor (ES);
- defining a failure model;
- notifying the error collector (EC) of the status of said Units;
- processing said Unit status information through said failure model, in said error supervisor (ES); and
- instructing, through said error supervisor (ES), said Units about workaround-actions to be taken
**characterized in that** the error collector (EC) and the error supervisor (ES) cooperate one with the other so that the error collector (EC) is adapted to detect whether the error supervisor (ES) is in operation or is failed and **in that**, if the error collector (EC) realizes that the error supervisor (ES) is failed, the error collector (EC) restores the error supervisor operation through a restore action.

2. The method according to claim 1, wherein the step of notifying the error collector (EC) of the status of Units is carried out by said Units which send to said error collector (EC) status and/or error indication messages (USI, UEI).

3. The method according to claim 1 or 2, wherein it further comprises a step of identifying in said EML server one or more Core-Units (CrU), said Core-Units (CrU) being able to send to said error collector (EC) different core metrics (CM).

4. The method according to any of preceding claims, wherein said step of processing Unit status information through said failure model comprises selecting workaround-actions (WA) from a set of predefined workaround-actions.

5. The method according to any of claims 1-4, wherein said Failure Model can be either static, dynamic or probabilistic.

6. The method according to any of preceding claims, wherein said error supervisor (ES) stores the taken workaround-actions (WA) in a proper log or memory (ES log).

7. The method according to any of preceding claims, wherein each sub-component individually communicates with said error collector (EC) and performs the workaround-actions (WA) according to the instructions from said error supervisor (ES).

8. The method according to any of the preceding claims, wherein it further comprises the steps of identifying, for each of said Units, a type of Unit; and defining, for each type of Unit, a set of predefined workaround-actions.

9. The method according to any of preceding claims, wherein said set of predefined workaround-actions comprises workaround-actions which are aimed to move the Units affected by a failure or an error to a stable condition.

10. The method according to any of preceding claims, wherein said workaround-actions to be taken comprise one or more of the following actions: restart, reset and restore.

11. The method according to any of claims 1-10, wherein said error collector (EC) stores error reports coming from components which are external to the EML server.

12. The method according to any of claims 2-11, wherein said error collector (EC) stores the most meaningful indications in a log or memory (EC log).

13. The method according to claim 8, wherein the step of identifying, for each of said Units, a type of Unit comprises the step of classifying said Units as permanent stated component, dynamic stated component and stateless component.

14. A computer product comprising computer program code means adapted to perform all the steps of claim 1 when said program is run on a computer.

15. The computer product according to claim 14, wherein it comprises a computer program.

16. The computer product according to claim 14, wherein it comprises a computer readable storage medium.

17. A network element comprising a computer product according to any of claims 14-16.

## Patentansprüche

1. Ein Verfahren zur automatischen Überwindung eines Versagens oder eines Fehlers in einem Elementmanagement-Schicht-(EML)-Server in einem Telekommunikationsnetzwerk, wobei das Verfahren die folgenden Schritte umfasst:
- Identifizieren einer oder mehrerer Einheiten in dem besagten Elementmanagement-Schicht-Server;
- Bereitstellen eines Fehlersammlers (EC);
- Bereitstellen eines Fehler-Supervisors (ES);
- Definieren eines Versagensmodells;
- Benachrichtigen des Fehlersammlers (EC) über den Zustand der besagten Einheiten;
- Verarbeiten der besagten Einheit-Zustandsdaten durch das besagte Versagensmodell in dem besagten Fehler-Supervisor (ES); und
- Unterrichten der besagten Einheiten, durch den besagten Fehler-Supervisor (ES), über auszuführende Abhilfemaßnahmen,
**dadurch gekennzeichnet, dass** der Fehlersammler (EC) und der Fehler-Supervisor (ES) zusammenwirken, wobei der Fehlersammler (EC) dazu ausgelegt ist, zu erkennen, ob der Fehler-Supervisor (ES) in Betrieb ist oder versagt hat, und dass, wenn der Fehlersammler (EC) feststellt, dass der Fehler-Supervisor (ES) versagt hat, der Fehlersammler (EC) den Betrieb des Fehler-Supervisors durch eine Wiederherstellungsmaßnahme wiederherstellt.

2. Das Verfahren nach Anspruch 1, wobei der Schritt des Benachrichtigens des Fehlersammlers (EC) über den Zustand von Einheiten von den besagten Einheiten durchgeführt wird, indem sie Zustands- und/oder Fehlermeldungen (USI, UEI) an den besagten Fehlersammler (EC) senden.

3. Das Verfahren nach Anspruch 1 oder 2, weiterhin umfassend einen Schritt des Identifizierens, in dem besagten EML-Server, einer oder mehrerer Kern-Einheiten (CrU), wobei die besagten Kem-Einheiten (CrU) dazu ausgelegt sind, verschiedene Kernmetriken an den besagten Fehlersammler (EC) zu senden.

4. Das Verfahren nach einem beliebigen der vorstehenden Ansprüche, wobei der besagte Schritt des Verarbeitens von Einheit-Zustandsdaten unter Verwendung des besagten Versagensmodells das Auswählen von Abhilfemaßnahmen (WA) aus einem Satz von vordefinierten Abhilfemaßnahmen umfasst.

5. Das Verfahren nach einem beliebigen der Ansprüche 1-4, wobei das besagte Versagensmodell entweder statisch, dynamisch oder wahrscheinlichkeitstheoretisch sein kann.

6. Das Verfahren nach einem beliebigen der vorstehenden Ansprüche, wobei der besagte Fehler-Supervisor (ES) die getroffenen Abhilfemaßnahmen (WA) in einem geeigneten Log oder Speicher (ES log) speichert.

7. Das Verfahren nach einem beliebigen der vorstehenden Ansprüche, wobei jede Teilkomponente individuell mit dem besagten Fehlersammler (EC) kommuniziert und die Abhilfemaßnahmen (WA) gemäß den Anweisungen von dem besagten Fehler-Supervisor (ES) ausführt.

8. Das Verfahren nach einem beliebigen der vorstehenden Ansprüche, weiterhin umfassend die Schritte des Identifizierens, für eine jede der besagten Einheiten, eines Einheiten-Typs, und des Definierens, für jeden Einheiten-Typ, eines Satzes von vordefinierten Abhilfemaßnahmen.

9. Das Verfahren nach einem beliebigen der vorstehenden Ansprüche, wobei der besagte Satz von vordefinierten Abhilfemaßnahmen Abhilfemaßnahmen umfasst, welche dazu bestimmt sind, die von einem Versagen oder Fehler betroffenen Einheiten in einen stabilen Zustand zu versetzen.

10. Das Verfahren nach einem beliebigen der vorstehenden Ansprüche, wobei die besagten durchzuführenden Abhilfemaßnahmen einen oder mehrere der nachfolgenden Vorgänge umfassen: Neustart, Rücksetzen und Wiederherstellen.

11. Das Verfahren nach einem beliebigen der Ansprüche 1-10, wobei der besagte Fehlersammler (EC) Fehlerberichte, welche von EML-serverexternen Komponenten kommen, speichert.

12. Das Verfahren nach einem beliebigen der Ansprüche 2-11, wobei der besagte Fehlersammler (EC) die aussagefähigsten Angaben in einem Log oder Speicher (EC log) speichert.

13. Das Verfahren nach Anspruch 8, wobei der Schritt des Identifizierens, für eine jede der besagten Einheiten, eines Einheiten-Typs den Schritt des Einstufens der besagten Einheiten als Komponente mit permanentem Zustand, Komponente mit dynamischem Zustand und zustandslose Komponente umfasst.

14. Ein Computerprodukt mit Computerprogramm-Mitteln, welche dazu ausgelegt sind, alle Schritte gemäß Anspruch 1 auszuführen, wenn das besagte Programm auf einem Computer läuft.

15. Das Computerprodukt nach Anspruch 14, wobei es ein Computerprogramm umfasst.

16. Das Computerprodukt nach Anspruch 14, wobei es ein computerlesbares Speichermedium umfasst.

17. Ein Netzwerkelement mit einem Computerprodukt nach einem beliebigen der Ansprüche 14-16.

## Revendications

1. Procédé pour corriger automatiquement une défaillance ou une erreur dans un serveur EML (Element Management Layer - couche de gestion des éléments) dans un réseau de télécommunication, le procédé comprenant les étapes suivantes :
- identifier une ou plusieurs Unités dans ledit serveur EML ;
- fournir un collecteur d'erreurs (EC) ;
- fournir un superviseur d'erreurs (ES) ;
- définir un modèle de défaillance ;
- notifier l'état desdites Unités au collecteur d'erreurs (EC) ;
- traiter lesdites informations d'état des Unités par l'intermédiaire dudit modèle de défaillance, dans ledit superviseur d'erreurs (ES) ; et
- indiquer auxdites Unités, par l'intermédiaire dudit superviseur d'erreurs (ES), les actions de contournement à exécuter
**caractérisé en ce que** le collecteur d'erreurs (EC) et le superviseur d'erreurs (ES) coopèrent l'un avec l'autre de sorte que le collecteur d'erreurs (EC) soit adapté pour détecter si le superviseur d'erreurs (ES) est opérationnel ou défaillant et **en ce que**, si le collecteur d'erreurs (EC) réalise que le superviseur d'erreurs (ES) est défaillant, le collecteur d'erreurs (EC) restaure l'opération du superviseur d'erreurs par l'intermédiaire d'une action de restauration.

2. Procédé selon la revendication 1, dans lequel l'étape de notification de l'état des Unités au collecteur d'erreurs (EC) est exécutée par lesdites Unités qui envoient audit collecteur d'erreurs (EC) des messages d'indication d'état et/ou d'erreur (USI, UEI).

3. Procédé selon la revendication 1 ou 2, comprenant en outre une étape d'identification, dans ledit serveur EML, d'une ou de plusieurs Unités de coeur (CrU), lesdites Unités de coeur (CrU) pouvant envoyer audit collecteur d'erreurs (EC) des indices de coeur (CM) différents.

4. Procédé selon l'une quelconque des revendications précédentes, dans lequel ladite étape de traitement des informations d'état des Unités par l'intermédiaire dudit modèle de défaillance comprend la sélection d'actions de contournement (WA) à partir d'un ensemble d'actions de contournement prédéfinies.

5. Procédé selon l'une quelconque des revendications 1 à 4, dans lequel ledit modèle de défaillance peut être statique, dynamique ou probabiliste.

6. Procédé selon l'une quelconque des revendications précédentes, dans lequel ledit superviseur d'erreurs (ES) enregistre les actions de contournement (WA) exécutées dans un journal ou une mémoire (ES log) approprié.

7. Procédé selon l'une quelconque des revendications précédentes, dans lequel chaque sous-composant communique individuellement avec ledit collecteur d'erreurs (EC) et exécute les actions de contournement (WA) conformément aux instructions dudit superviseur d'erreurs (ES).

8. Procédé selon l'une quelconque des revendications précédentes, comprenant en outre les étapes d'identification, pour chacune desdites Unités, d'un type d'Unités, et de définition, pour chaque type d'Unités, d'un ensemble d'actions de contournement prédéfinies.

9. Procédé selon l'une quelconque des revendications précédentes, dans lequel ledit ensemble d'actions de contournement prédéfinies comprend des actions de contournement qui ont pour but de faire passer à un état stable les Unités affectées par une défaillance ou une erreur.

10. Procédé selon l'une quelconque des revendications précédentes, dans lequel lesdites actions de contournement devant être exécutées comprennent une ou plusieurs des actions suivantes : redémarrer, réinitialiser et restaurer.

11. Procédé selon l'une quelconque des revendications 1 à 10, dans lequel ledit collecteur d'erreurs (EC) enregistre des rapports d'erreurs provenant des composants qui sont externes au serveur EML.

12. Procédé selon l'une quelconque des revendications 2 à 11, dans lequel ledit collecteur d'erreurs (EC) enregistre les indications les plus significatives dans un journal ou une mémoire (EC log).

13. Procédé selon la revendication 8, dans lequel l'étape d'identification, pour chacune desdites Unités, d'un type d'Unités comprend l'étape de classification desdites Unités comme composant à état permanent, composant à état dynamique et composant sans état.

14. Produit informatique comprenant des moyens à code de programme informatique adaptés pour exécuter toutes les étapes de la revendication 1 lorsque ledit programme est exécuté sur un ordinateur.

15. Produit informatique selon la revendication 14, comprenant un programme informatique.

16. Produit informatique selon la revendication 14, comprenant un support de stockage lisible par un ordinateur.

17. Elément de réseau comprenant un produit informatique selon l'une quelconque des revendications 14 à 16.
